Europäisches Patentamt

European Patent Office

Office européen des brevets

(11) Veröffentlichungsnummer: **0 230 297 B1**

(12) **EUROPÄISCHE PATENTSCHRIFT**

(45) Veröffentlichungstag der Patentschrift: **11.11.92**

(21) Anmeldenummer: **87100642.5**

(22) Anmeldetag: **19.01.87**

(51) Int. Cl.5: **B26D 7/01**, B27B 31/00, B23Q 15/00, B23Q 17/00

(54) **Verfahren zur Positionierung und Vermessung von Werkstücken auf Bearbeitungsstrassen.**

(30) Priorität: **20.01.86 DE 3601523**

(43) Veröffentlichungstag der Anmeldung:
**29.07.87 Patentblatt 87/31**

(45) Bekanntmachung des Hinweises auf die Patenterteilung:
**11.11.92 Patentblatt 92/46**

(84) Benannte Vertragsstaaten:
**AT BE CH ES FR GB GR IT LI LU NL SE**

(56) Entgegenhaltungen:
**DD-A- 245 040**
**DE-A- 1 911 629**
**DE-A- 2 913 850**
**US-A- 3 780 777**
**US-A- 4 294 149**

**BAUEN MIT HOLZ, Band 6, Juni 1983, Seiten 398-400, Karsruhe, DE;**
**"Burmek-Abbund-Fertigungslinie"**

**PATENT ABSTRACTS OF JAPAN, Band 9, Nr. 231 (M-414), 18. September 1985, Seite 64 M 414; & JP-A-60 87 962 (SHIN NIPPON SEITET-SU K.K.) 17-05-1985**

**LE NOUVEL AUTOMATISME, Band 27, Nr. 30, Mai 1982, Seiten 56-61, Paris, FR; P. MARTIN et al.: "Automatisation dans l'industrie du bois"**

(73) Patentinhaber: **Richter, Manfred**
**Altjoch 19**
**W-8113 Kochel(DE)**

(72) Erfinder: **Richter, Manfred**
**Altjoch 19**
**W-8113 Kochel(DE)**

(74) Vertreter: **Kern, Wolfgang, Dipl.-Ing. et al**
**Patentanwälte Kern, Brehm und Partner**
**Albert-Rosshaupter-Strasse 73**
**W-8000 München 70(DE)**

EP 0 230 297 B1

## Beschreibung

Die Erfindung betrifft ein Verfahren zur Positionierung und Vermessung von Werkstücken auf Bearbeitungsstraßen, insbesondere Schnitthölzern auf Abbundstrassen, bei dem die Werkstücke aufeinanderfolgend mehrere Bearbeitungsstationen durchlaufen, um in diesen stationär und/oder instationär hinsichtlich der betreffenden Bearbeitungsstationen verschiedenen Bearbeitungsvorgängen unterworfen zu werden.

Bekannte Verfahren dieser Art (DE-Zeitschrift "bauen mit holz", 6/83, Seiten 398 bis 400), arbeiten mit mechanischen Steuerungen derart, daß der Werkstückvorschub von Station zu Station durch mechanische Mittel wie Anschläge, Schranken und mit dem Werkstück verbundene Positionierungswagen, die beispielsweise mit Hilfe eines auf der Welle eines Motors sitzenden Winkelschrittgebers gesteuert werden, so bewirkt wird, daß entsprechend einem vorgegebenen Bearbeitungsprogramm die Werkstücke in den einzelnen Stationen abgelängt, gefräst, gebohrt oder dergleichen bearbeitet werden.

Es hat sich nun gezeigt, daß diese Art der Positionierung und Vermessung der Werkstücke nicht nur zeitaufwendig ist, sondern auch mit relativ großen Fehlern behaftet sein kann, weil insbesondere im Falle der Bearbeitung von Schnitthölzern die Einflüsse des Holzgewichtes, seiner Oberflächenbeschaffenheit u. dgl. zu ungenauen Positionierungen auf den Abbundstraßen führen, wodurch bei der Bearbeitung erheblicher Ausschuß unvermeidlich ist.

Aus der JP-A-60 87 962 ist ein Verfahren bekannt, bei dem ein Werkstück mit Hilfe von Fotodetektoren positioniert und vermessen wird, von denen beim Abtasten des Werkstücks wenigstens einer in Bewegungsrichtung des Werkstücks vor und einer hinter dem Werkstück angeordnet ist.

Der Erfindung liegt die Aufgabe zugrunde, ein Verfahren der eingangs angegebenen Art so weiterzubilden, daß die Positionierung und Vermessung des Werkstücks verbessert ist.

Diese Aufgabe wird erfindungsgemäß durch ein Verfahren mit den Merkmalen des Patentanspruchs 1 gelöst.

Vorteilhafte Ausgestaltungen des erfindungsgemäßen Verfahrens sind Gegenstand der Unteransprüche.

So soll bei einer Verfahrensvariante sich das Werkstück synchron zur lichtempfindlichen Optik bewegen. Im Fall einer Abweichung dieser synchronen Bewegung wird ein Korrektursignal erzeugt, das den Werkstückvorschub bzw. die Geschwindigkeit der Bearbeitungsstraße so verstellt, daß der synchrone Bewegungszustand wieder hergestellt wird.

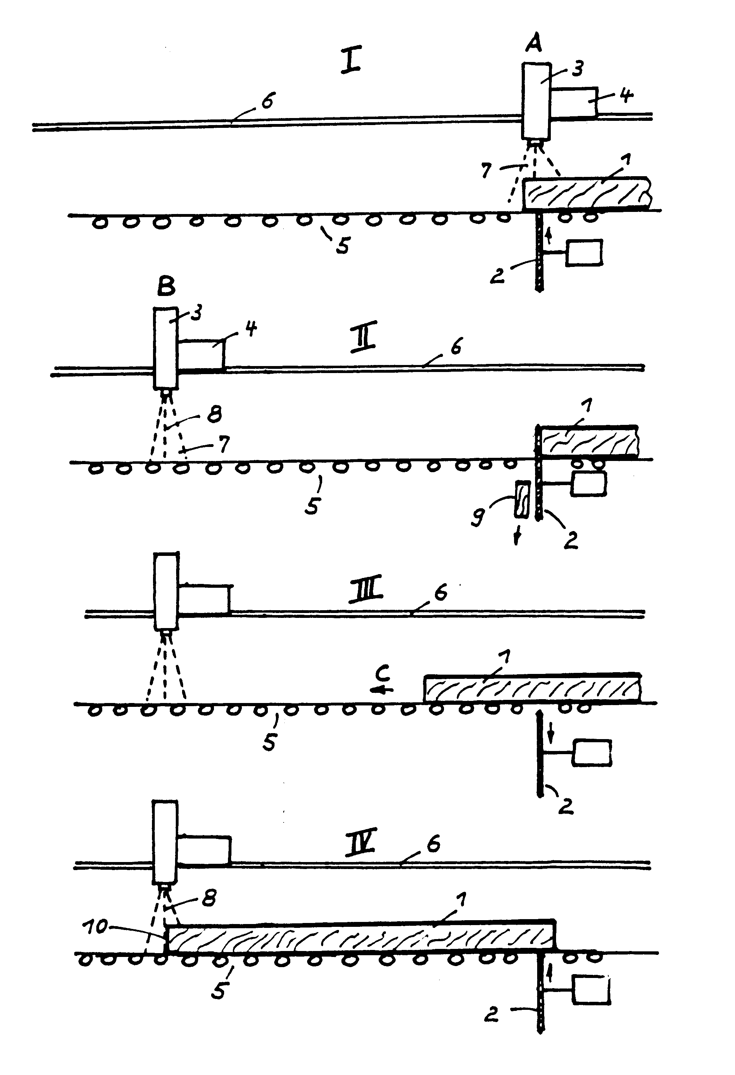

Die Erfindung wird nachfolgend anhand des in der Zeichnung dargestellten Ausführungsbeispiels näher erläutert.

In der Zeichnung ist ein Ausführungsbeispiel des erfindungsgemäßen Verfahrens schematisch dargestellt, das vier Betriebszustände I bis IV eines Teils einer Schnitthölzer bearbeitenden Abbundstraße zeigt, die eine Ablängsäge 2 enthält, die ein auf einer angetriebenen Rollenbahn 5 vorwärts bewegtes Werkstück 1 in Form eines Langholzes auf gewünschte Längen abschneidet.

Die vier Betriebszustände I bis IV der Abbundstraße unterscheiden sich in bezug auf die Vorschubposition des Holzes voneinander.

Im Zustand I ist das Werkstück 1 auf der Rollenbahn 5 in die Ablängsäge 2, z.B. eine Kreissäge, eingefahren und mit Hilfe einer über der Rollenbahn 5 auf einer Laufschiene 6 verfahrbar angeordneten lichtempfindlichen Optik 3, z.B. einer Zeilenkamera, in bezug auf die Kreissäge 2 so angeordnet worden, daß ein vorgewählter Überstand 9 des Werkstückes 1 abgeschnitten werden kann.

Nach der Positionierung des Werkstücks 1 wird die Kreissäge 2 durch nicht dargestellte Mittel zum Schnitt freigegeben, wobei sie in bekannter Weise gegen das Werkstück 1 gefahren wird. Nach erfolgter Freigabe der Kreissäge 2 wird die Zeilenkamera 3 mit Hilfe einer mit ihr verbundenen Positioniereinrichtung 4 auf der Laufschiene 6 aus der Bearbeitungsposition A in die nächste Bearbeitungsposition B verfahren. Dies geschieht mit Hilfe einer rechnergestützten Steuerung. In dem zugehörigen Rechner ist das Bearbeitungsprogramm eingegeben, das die Längenabschnitte vorschreibt, die bei der Bearbeitung des Werkstücks 1 einzuhalten sind, d.h. um die die Zeilenkamera von Bearbeitungsposition A zu Bearbeitungsposition B versetzt werden muß.

Die Weiterführung der Zeilenkamera von einer Bearbeitungsposition zur anderen erfolgt selbsttätig über bekannte Positioniereinrichtungen, beispielsweise Winkel-schrittgeber, die an der Motorwelle des Kameravorschubs befestigt sind. Ein solcher Winkel schrittgeber ist ein Organ, das zwischen einer Anzahl von Umdrehungen der Kameraantriebswelle und einer von der Zeilenkamera 3 auf der Laufschiene 6 zurückzulegenden Strecke ein bestimmtes Verhältnis bildet, so daß nach Erreichen einer bestimmten Anzahl Wellenumdrehungen die gewünschte bestimmte Strecke zurückgelegt ist.

Sobald die Kreissäge 2 den gewünschten Überstand 9 vom Werkstück 1 getrennt hat, wie dies in der Bearbeitungsstufe II ersichtlich ist, und sich die Kreissäge 2 abgesenkt hat, um den Rollenbahnweg freizugeben, wird der Antrieb der Rollenbahn 5 eingeschaltet, um das Werkstück 1 in Richtung des Pfeils C vorwärtszubewegen. Das Werkstück 1 gelangt dabei, wie aus dem mit IV bezeichneten Betriebszustand ersichtlich, mit seinem vorderen Ende in das kegelförmige Sichtfeld 7 der Zeilenkamera 3 und wird beim Eintreten in das Sichtfeld 7 durch Drosselung des Rollenbahnantriebs so abgebremst, daß es mit diesem Ende möglicht im zentralen Sichtstrahl 8 der Zeilenkamera 3 stehenbleibt, da diese Position die nächste Bearbeitungsposition darstellt, in der das hintere Ende des Werkstücks 1 mit der Kreissäge 2 abgeschnitten wird, die zu diesem Zweck nach dem Stillstand des Werkstücks 1 gegen dessen Oberfläche gefahren wird.

Sollte nun das vordere Ende 10 des Werkstücks 1 über den zentralen Sichtstrahl 8 hinauslaufen, also bei den gegebenen Bedingungen aufgrund eines höheren Werkstückgewichtes als angenommen oder eines zu geringen Reibungsfaktors, der das Werkstück 1 über die Rollen rutschen läßt, infolge seiner Massenträgheit nicht in der gewünschten Position zum Stillstand kommen, so wird diese Fehlposition durch die Zeilenkamera erkannt und mit Hilfe eines Korrektursignals über den Rechner ein Steuerimpuls ausgelöst, der den Rollenbahnantrieb rückwärts laufen läßt, bis die vorgesehene Bearbeitungsposition des Werkstücks 1 erreicht ist, d.h. der zentrale Sichtstrahl mit dem vorderen Werkstückende 10 fluchtet oder bündig ist.

Auf diese Weise ist je nach den gegebenen Umständen ein automatisches Hin- und Herpendeln des Werkstücks 1 bis zur Erreichung der endgültigen Position möglich. Jedenfalls läßt sich diese endgültige Position in annehmbarer Zeitspanne erreichen. Auch lassen sich Einstelltoleranzen von etwa 1 mm auf 10 m Werkstücklänge verwirklichen.

Der oben geschilderte Bearbeitungsfall ist nur eine relativ einfache Bearbeitung eines Werkstücks, bei der es sich darum handelt, bei einem Holzbalken die Enden genauestens zu beschneiden. In aller Regel werden mit Hilfe des hier beschriebenen Verfahrens kompliziertere Bearbeitungen vorgenommen, so beispielsweise das Herstellen von Bohrungen innerhalb des Werkstücks oder Einkerbungen oder Ausfräsungen, wobei in jedem Fall mit Hilfe der Zeilenkamera oder einer äquivalenten lichtempfindlichen Optik, zu der auch eine Videokamera gehören könnte, ein positionsgenaues Einstellen mit Hilfe eines angeschlossenen Computers ermöglicht wird.

Der Einstellvorgang des auf der Rollenbahn 5 liegenden Werkstücks 1 beschränkt sich aber nicht nur auf die Werkstücklänge, sondern kann auch die Werkstückbreite berücksichtigen, da die Zeilenkamera 3 entsprechend ihrem Kegel eine Breitenabtastung ermöglicht.

Die Steuerung der Werkstückbearbeitung mit Hilfe der Zeilenkamera 3 hat darüber hinaus den Vorteil, daß selbst überlange Werkstücke, d. h. solche, die länger sind als die Schienenlänge, über die die Zeilenkamera maximal verfahren werden kann, bearbeitet werden können. Zu diesem Zweck müßte die Zeilenkamera 3, die sich ja oberhalb des Werkstücks 1 befindet, auf einen internen Bearbeitungspunkt, beispielsweise eine im Werkstück 1 vorhandene Bohrung eingestellt werden, die als Abgleichstelle dient, derart, daß von dieser Bohrung aus zunächst der Abstand zu dem bereits bearbeiteten Ende bzw. zu der bereits bearbeiteten Stelle, die über das Ende der Rollenbahnstrecke hinausragt, durch Abfahren der Zeilenkamera 3 vom internen Bezugspunkt bis zu dem letztgenannten Bezugspunkt festgestellt wird. Dieser Abstand wird dann in dem angeschlossenen Rechner gespeichert zu dem Zweck, daß die neue Bearbeitungslänge von dem internen Bezugspunkt aus gemessen wird, d. h. das Werkstück 1 um diese neue Bearbeitungslänge in bezug auf das Werkzeug, also beispielsweise die Kreissäge 2, auf der Rollenbahn 5 vorwärts bewegt wird.

## Patentansprüche

1. Verfahren zur Positionierung und Vermessung von Werkstücken auf Bearbeitungsstraßen, insbesondere Schnitthölzern auf Abbundstraßen, bei dem die Werkstücke (1) aufeinanderfolgend mehrere Bearbeitungsstationen durchlaufen, um in diesen stationär und/oder instationär hinsichtlich der betreffenden Bearbeitungsstation verschiedenen Bearbeitungsvorgängen unterworfen zu werden, dadurch **gekennzeichnet,** daß die Vorwärtsbewegung des Werkstücks (1) von einer Bearbeitungsstation zur nächstfolgenden sowie die Positionierung des Werkstücks (1) in jeder Bearbeitungsstation durch optoelektronische Mittel gesteuert werden, zu denen eine einzige lichtempfindliche Optik (3) gehört, die oberhalb der Werkstückbewegungsbahn oder seitlich zu dieser angeordnet beim Passieren des Werkstücks (1) an einer ersten Bearbeitungsposition (A) ein Positionssignal erzeugt, das das Werkstück (1) positioniert und den Bearbeitungsvorgang auslöst, und die nach dem Positionieren in dieser ersten Bearbeitungsposition (A) entlang der Bewegungsstrecke des Werkstücks (1) zu einer nächstfolgenden, zweiten Bearbeitungsposition (B) verfahren wird und dort nach Beendigung des ersten Bearbeitungsvorgangs beim Passieren des Werkstücks (1) an der zweiten Bearbeitungsposition (B) eine Positionssignal erzeugt, welches das Werkstück (1) positioniert, so daß dieses mit dem Abstand der beiden Bearbeitungspositionen (A, B) vermessen wird, und welches einen weiteren Bearbeitungsvorgang auslöst.

2. Verfahren nach Anspruch 1, dadurch **gekennzeichnet,** daß die lichtempfindliche Optik (3) an einen Computer angeschlossen ist, der das erzeugte Positionssignal mit einem gespeicherten Bearbeitungsprogramm vergleicht und seinerseits die Steuerbefehle an den Werkstückvorschub bewirkende Antriebselemente abgibt.

3. Verfahren nach Anspruch 1 oder 2, dadurch **gekennzeichnet,** daß das Werkstück (1) synchron zur lichtempfindlichen Optik (3) bewegt wird und daß im Falle der Abweichung von der synchronen Bewegung ein Korrektursignal erzeugt wird, welches den Werkstückvorschub so verstellt, daß der synchrone Bewegungsablauf wieder hergestellt wird.

4. Verfahren nach einem der Ansprüche 1 bis 3, dadurch **gekennzeichnet,** daß als lichtempfindliche Optik wenigstens eine Zeilenkamera (3) verwendet wird.

5. Verfahren nach Anspruch 4, dadurch **gekennzeichnet,** daß das auf der Bearbeitungsstraße vorrückende Werkstück (1) beim Erreichen des von der Zeilenkamera (3) erzeugten Sichtkegels so abgebremst wird, daß sein vorderes Ende genau unterhalb des zentralen Sichtstrahls der Zeilenkamera (3) stehen bleibt.

6. Verfahren nach einem der vorhergehenden Ansprüche, dadurch **gekennzeichnet,** daß das Werkstück (1) bei seiner Vorwärtsbewegung auf der Bearbeitungsstraße für den Fall, daß sein vorderes Ende über die durch den zentralen Sichtstrahl der lichtempfindlichen Optik (3) festgelegte Position hinausfährt, automatisch dadurch zurück in Fluchtungslage mit diesem Sichtstrahl bewegt wird, daß der Bearbeitungsstraßenantrieb umgesteuert wird, indem dieser über die lichtempfindliche Optik (3) und einen daran angeschlossenen Computer mit Hilfe eines Korrektursignals geschaltet wird.

7. Verfahren nach Anspruch 3, dadurch **gekennzeichnet,** daß als lichtempfindliche Optik (3) mehrere Fotozellen verwendet werden.

8. Verfahren nach Anspruch 3, dadurch **gekennzeichnet,** daß als lichtempfindliche Optik (3) eine Videokamera verwendet wird.

**Claims**

1. Method for positioning and measuring workpieces (1) on production lines particularly of cut wood on transfer lines, wherein the workpieces (1) pass successively several treatment stations in which they are with respect to the concerned treatment stations involved with different stationary and/or instationary treatment operations, **characterized** in that the forward movement of the workpiece (1) from one treatment station to the following one as well as the positioning of the workpiece (1) in each treatment station are controlled by optoelectronic means provided with a signal light sensitive optical means, which is located above the movement track of the workpiece or lateral thereto and provides during the passage of the workpiece (1) at a first treatment position (A) a position signal which positions the workpiece (1) and starts the treatment operation and which is moved after the positioning in said first treatment position (A) along the movement track of the workpiece (1) to a next following second treatment position (B) and provides there after finishing the first treatment operation during the passage of the workpiece (1) at the second treatment position (B) a positioning signal which positions the workpiece (1) so that this is measured with the distance of the two treatment positions (A, B) and which starts a further treatment operation.

2. Method according to claim 1, **characterized** in that the light sensitive optical means (3) is connected to a computer comparing the provided positioning signal with a stored treatment program and delivers the control commands to the driving elements causing the feed of the workpiece.

3. Method according to claim 1 or 2, **characterized** in that the workpiece (1) is moved synchronously with the light sensitive optical means (3) so that in case of a divergency from the synchrone movement a correction signal is provided which adjusts the feed of the workpiece such that the synchrone course of movement is re-established.

4. Method according to one of the claims 1 - 3 , **characterized** in that as light sensitive optical means at least one line camera (3) is used.

5. Method according to claim 4, **characterized** in that the workpiece (1) proceeding on the production line is retarded if arriving the sight cone provided by the line camera (3) such that its front end is stopped precisely below the central sight beam of the line camera (3).

6. Method according to one of the foregoing claims, **characterized** in that the workpiece (1) is on its forward movement on the production line automatically returned to a position in line with a sight beam in case its front end is moved beyond the position predecated by the central sight beam of the light sensitive optical means (3) so that the driving means of the production line is returned by switching it through the light sensitive optical means (3) and a computer connected thereto by means of a correcting signal.

7. Method according to claim 3, **characterized** in that several photocells are used as light sensitive optical means (3).

8. Method according to claim 3, **characterized** in that a video camera is used as optical means (3).

**Revendications**

1. Procédé pour le positionnement et la mesure de pièces à usiner sur des chaînes de façonnage, en particulier de bois de sciage sur des chaînes de traitement, dans lequel les pièces à usiner (1) traversent successivement plusieurs postes d'usinage, afin d'être soumises dans ceux-ci à différentes opérations d'usinage en étant fixes et/ou mobiles par rapport au poste d'usinage considéré,
caractérisé en ce que
l'avancement de la pièce à usiner (1) depuis un poste d'usinage vers le suivant ainsi que le positionnement de la pièce (1) dans chaque poste d'usinage sont commandés par des moyens optoélectroniques, dont fait partie une unique optique photosensible (3)
qui est placée au-dessus de la voie d'acheminement des pièces ou latéralement par rapport à celle-ci, et qui produit lors du passage de la pièce (1) au niveau d'une première position d'usinage (A) un signal de position qui positionne la pièce à usiner (1) et qui déclenche l'opération de façonnage, et
qui après le positionnement dans cette première position d'usinage (A), est déplacée le long de la voie d'acheminement de la pièce à usiner (1) vers une deuxième position d'usinage (B) immédiatement à la suite et qui produit à cet endroit, après l'achèvement de la première opération, lors du passage de la pièce à usiner (1) à la deuxième position (B), un signal de position qui positionne la pièce à usiner (1) de telle manière que celle-ci est mesurée par l'écart entre les deux positions d'usinage (A, B), et que le signal déclenche une nouvelle opération de façonnage.

2. Procédé selon la revendication 1, caractérisé en ce que l'optique photosensible (3) est reliée à un ordinateur, qui compare le signal de position produit à un programme de façonnage mémorisé et qui fournit de son côté les instructions de commande aux éléments d'entraînement qui effectuent l'avance de la pièce à usiner.

3. Procédé selon la revendication 1 ou la revendication 2, caractérisé en ce que la pièce à usiner (1) est déplacée de manière synchrone par rapport à l'optique photosensible (3) et en ce que, dans le cas d'un écart par rapport au mouvement synchrone, un signal de correction est produit, qui règle l'avance de la pièce à usiner de telle manière que le déroulement synchrone du déplacement est de nouveau obtenu.

4. Procédé selon l'une quelconque des revendications 1 à 3, caractérisé en ce qu'au moins une caméra à lignes (3) est utilisée en tant qu'optique photosensible.

5. Procédé selon la revendication 4, caractérisé en ce que la pièce à usiner (1) qui avance sur la chaîne de façonnage est freinée lorsqu'elle atteint le cône optique produit par la caméra à lignes (3), de telle manière que son extrémité avant s'arrête précisément sous le faisceau optique central de la caméra à lignes (3).

6. Procédé selon l'une quelconque des revendications précédentes, caractérisé en ce que la pièce à usiner (1) lors de son avancement sur la chaîne de façonnage, dans le cas où son extrémité avant dépasse la position déterminée par le faisceau optique central de l'optique photosensible (3), est automatiquement ramenée dans la position d'alignement avec ce faisceau optique du fait que la commande de la chaîne de façonnage est inversée, par une commutation par l'intermédiaire de l'optique photosensible (3) et d'un ordinateur relié à celle-ci, au moyen d'un signal de correction.

7. Procédé selon la revendication 3, caractérisé en ce qu'on utilise en tant qu'optique photosensible (3), plusieurs cellules photoélectriques.

8. Procédé selon la revendication 3, caractérisé en ce qu'on utilise en tant qu'optique photosensible (3) une caméra vidéo.